# EUROPÄISCHE PATENTSCHRIFT

(11) **EP 2 884 066 B1**
(45) Veröffentlichungstag und Bekanntmachung des Hinweises auf die Patenterteilung: **11.01.2017**
(21) Anmeldenummer: 13196688.9
(22) Anmeldetag: 11.12.2013
(51) Int. Cl.: F01N 3/023, B01D 41/04

(54) **Verfahren zur Diagnose eines Gegenstandes sowie Vorrichtung hierzu**
Method for diagnosing an object and a device for carrying out the said method
Procédé de diagnostic d'un objet et dispositif correspondant

(43) Veröffentlichungstag der Anmeldung: 17.06.2015
(73) Patentinhaber: Hirtenberger Aktiengesellschaft, 2552 Hirtenberg (AT)
(72) Erfinder: Mayer, Hanspeter, 8643 Allerheiligen (AT)
(74) Vertreter: Wirnsberger, Gernot

(56) Entgegenhaltungen:
- EP-A1- 2 446 952
- EP-A1- 2 543 836
- WO-A1-2008/091218
- WO-A1-2011/142718
- WO-A1-2012/109691

## Beschreibung

Die Erfindung betrifft ein Verfahren zur Diagnose eines Gegenstandes wie eines Katalysators oder eines Filters.

Weiter betrifft die Erfindung eine Vorrichtung zur Diagnose eines Gegenstandes wie eines Katalysators oder eines Filters.

Aus dem Stand der Technik sind Verfahren und Vorrichtungen zur Diagnose von insbesondere gasdurchlässigen Gegenständen wie Katalysatoren und Filtern bekannt geworden, welche für eine Reinigung bzw. eine Wiederaufbereitung aus einer Anlage, insbesondere einem Fahrzeug, ausgebaut werden. Bei aus dem Stand der Technik bekannten Verfahren wird eine physikalische Funktion von als Wall-Flow-Filtern aufgebauten gasdurchlässigen Katalysatoren dadurch gemessen, dass beispielsweise ein Gegendruck oder ein Gewicht des Katalysators gemessen werden, um eine Aussage bezüglich einer Verunreinigung des Katalysators zu erhalten. Dabei ermittelte Daten sind jedoch nicht ausreichend, um eine Funktion des Katalysators im Fahrzeug nach einem Wiedereinbau beurteilen zu können. Insbesondere kann mit Verfahren des Standes der Technik nicht ermittelt werden, ob mit dem Katalysator nach erneutem Einbau in ein Fahrzeug relevante Abgasnormen erreichbar sind.

Aufgabe der Erfindung ist es daher, ein Verfahren der eingangs genannten Art anzugeben, mit welchem eine besonders genaue Aussage über eine Funktion eines derartigen Gegenstandes getroffen werden kann.

Weiter soll eine Vorrichtung der eingangs genannten Art angegeben werden, mit welcher eine Funktion solchen Gegenstandes besonders genau ermittelbar ist.

Die erste Aufgabe wird erfindungsgemäß dadurch gelöst, dass bei einem Verfahren der eingangs genannten Art zur Messung einer katalytischen Reaktivität eine Stirnseite des Gegenstandes mit einem Prüfmedium mit definierter Zusammensetzung wie Propangas oder Kohlenmonoxid mittels einer Einrichtung durch eine Öffnung beaufschlagt wird und an einer stromabwärts gelegenen Position eine Konzentration von zumindest einem reduzierten oder oxidierten Bestandteil des Prüfmediums nach Passieren des Gegenstandes gemessen wird.

Dadurch kann eine katalytische Reaktivität des in der Regel gasdurchlässigen Katalysators bzw. eines gasdurchlässigen Filters mit einer katalytischen Beschichtung gemessen und eine Aussage über mit dem Katalysator erreichbare Abgasnormen getroffen werden. Dieses Verfahren kann automatisiert und mit geringen Kosten durchgeführt werden. Weiter wird bei Einsatz dieses Verfahrens nach einer Wiederaufbereitung ein Risiko vermieden, dass Katalysatoren wieder in ein Fahrzeug eingesetzt werden, welche eine unzureichende katalytische Reaktivität aufweisen. Die katalytische Reaktivität ist ein Maß dafür, wie gut Schadstoffe im Katalysator umgesetzt werden. Ein erfindungsgemäßes Verfahren ermöglicht es, ein Alterungsverhalten eines Katalysators sowie eine Qualität einer katalytischen Beschichtung in einem Neuzustand zu bestimmen. Dabei kann beispielsweise auch eine Aussage über einen Platingehalt der Beschichtung getroffen werden. Das Verfahren kann selbstverständlich an jeder der beiden Stirnseiten des Katalysators durchgeführt werden. Es können auch beide Stirnseiten gleichzeitig mit einem entsprechenden Prüfmedium beaufschlagt werden. Als Prüfmedium wird üblicherweise Kohlenmonoxid, Propangas, Stickstoffmonoxid, ein Aerosol oder eine Prüfflüssigkeit eingesetzt. Vorzugsweise wird ein Prüfgas eingesetzt.

Erfindungsgemäß wird das vorzugsweise chemisch reaktive Prüfmedium bei verschiedenen Temperaturen zugeführt, um eine katalytische Reaktivität des Gegenstandes bei verschiedenen Temperaturen zu bestimmen. Dadurch können eine Light-off-Kurve sowie ein 50 %-Light-off-Punkt ermittelt werden. Als 50 %-Light-off-Punkt wird jene Temperatur bezeichnet, bei welcher 50 % der Schadstoffe im Katalysator umgewandelt werden. In der Regel liegt dieser Punkt bei neuen Katalysatoren für dieselbetriebene Kraftfahrzeuge bei etwa 240 °C. Bei gebrauchten Katalysatoren verschiebt sich dieser Punkt in Richtung höherer Temperaturen. Über eine Messung der Konversions- bzw. Umsetzungsrate über die Temperatur kann eine sogenannte Light-off-Kurve ermittelt werden, aus welcher der eine katalytische Funktion bzw. Reaktivität des Katalysators kennzeichnende 50 %-Light-off-Punkt hervorgeht. Dieser 50 %-Light-off-Punkt kann dann beispielsweise als Qualitätskriterium zur Beurteilung und Klassifikation wiederaufbereiteter Katalysatoren herangezogen werden. Eine Verschiebung des 50 %-Light-off-Punktes in Richtung niedrigerer Temperaturen ist damit ein Indikator für eine Verbesserung der katalytischen Reaktivität bzw. der Konvertierungsrate des Katalysators. Weiter können dadurch Veränderungen wie eine Verschiebung der Light-off-Kurve in Richtung höherer Temperaturen oder eine Abflachung der Light-off-Kurve in Richtung einer geringeren Umsatzrate festgestellt werden. Weiter kann dadurch eine für eine maximale Umsatzrate optimale Raumgeschwindigkeit, also ein Verhältnis eines Volumenstromes zu einem Volumen des Katalysators, ermittelt werden.

Vorzugsweise wird die Messung in einem Temperaturbereich von 10 °C bis 600 °C, insbesondere 200 °C bis 300 °C, und bei einem Volumenstrom zwischen 0 dm³/min und 33000 dm³/min durchgeführt. Dieser Wert bezieht sich auf einen Vollstrom. In einem Teilstrom hat sich ein Volumenstrom von 0 dm³/min bis 3000 dm³/min als günstig erwiesen. Ein Massenstrom beträgt mit Vorteil etwa 0 kg/h bis 2000 kg/h im Vollstrom. Üblicherweise werden Katalysatoren mit einem Durchmesser von etwa 30 cm eingesetzt. Besonders bewährt hat sich eine Durchflussgeschwindigkeit des Prüfmediums bei der Messung von mehr als 0 m/s bis etwa 50 m/s, um aussagekräftige Messergebnisse zu erhalten. Eine optimale Raumgeschwindigkeit beträgt 10000 1/h bis 120000 1/h.

Eine Messung der katalytischen Reaktivität erfolgt in der Regel, indem eine Prozessluft auf etwa 400 °C erwärmt wird, wonach der Gegenstand mit der Prozessluft auf etwa 300 °C erwärmt wird. Anschließend wird das Prüfmedium, insbesondere ein Prüfgas, erwärmt und der Prozessluft beigemischt, wobei ein sich dabei ergebendes Gasgemisch eine Temperatur von etwa 300 °C vor dem Katalysator aufweist. Während der Messung werden eine Kohlenwasserstoffkonzentration in Strömungsrichtung hinter und gegebenenfalls auch vor dem Katalysator, Temperatur vor und hinter dem Katalysator, Druckverlust über den Katalysator und Partikelmenge gemessen. Gleichzeitig wird eine Menge des Prüfmediums schrittweise oder kontinuierlich erhöht, beispielsweise von 0 dm³/min bis auf 2000 dm³/min im Teilstrom oder im Vollstrom von 0 dm³/min bis auf 50000 dm³/min. In der Regel wird eine Einrichtung eingesetzt, mit welcher das Prüfmedium gezielt in unterschiedliche Teilbereiche des Katalysators einbringbar ist, sodass für einzelne Teilbereiche die katalytische Reaktivität bestimmt werden kann. Wenn die Messung für sämtliche Teilbereiche des Katalysators durchgeführt worden ist, wird die Temperatur schrittweise erhöht und die Messung abermals durchgeführt, um einen weiteren Messpunkt bei höherer Temperatur zu erhalten. Dies wird wiederholt, bis der Katalysator für einen gewünschten Temperaturbereich vermessen ist.

Es ist von Vorteil, dass vor, nach oder während einer Messung der katalytischen Reaktivität eine Reinigung des Gegenstandes erfolgt, insbesondere mit einer als integrierte Diagnose- und Reinigungseinrichtung ausgebildeten Einrichtung. Dadurch kann die Vorrichtung neben einer Messung einer Qualität des Katalysators, der katalytischen Reaktivität, auch zur Reinigung des Katalysators eingesetzt werden, sodass ein besonders effizientes Verfahren erreicht wird. Eine integrierte Diagnose- und Reinigungseinrichtung ermöglicht es, sowohl eine Qualität des Katalysators zu messen als auch abhängig von der gemessenen Qualität eine Reinigung durchzuführen, sodass ein besonders effizientes Verfahren erreicht wird. Üblicherweise wird hierzu eine Reinigung mittels eines durch eine Öffnung der Einrichtung transportierten Mediums durchgeführt, wobei auch eine Qualität mittels eines durch dieselbe Öffnung transportierten Mediums oder einer durch die Öffnung transportierten Strahlung gemessen wird. Weiter kann eine Qualitätsprüfung durch Messung einer Anzahl oder einer Masse von durch den Filter transportierten Partikeln sowie durch Messung eines Volumen- oder Massenstromes erfolgen, bei welchem bei einer definierten Temperatur eine maximale Konvertierungsrate erreicht wird.

Günstig ist es, dass eine Reinigung mittels eines vorzugsweise gasförmigen Mediums erfolgt, welches insbesondere ebenfalls durch die Öffnung auf den Gegenstand aufgebracht wird. Somit können eine Diagnose und eine Reinigung desselben Bereiches des Katalysators erfolgen, ohne den Katalysator oder die Diagnose- und Reinigungseinrichtung zu bewegen. Dadurch wird gewährleistet, dass exakt derselbe Teilbereich gereinigt und diagnostiziert wird, ohne die Einrichtung bewegen zu müssen, was zu Fehlern führen kann. Weiter ermöglicht dies einen besonders raschen Wechsel von einem Diagnoseverfahren auf ein Reinigungsverfahren, sodass ein mittels einer Qualität als Regelgröße geregeltes Reinigungsverfahren sehr effizient durchgeführt werden kann. Vorteil eines rein gasförmigen Reinigungsmediums ist, dass Beschädigungen am Katalysator vermieden werden, welche üblicherweise bei einer Reinigung mit Flüssigkeiten oder mit Feststoffen enthaltenden Fluiden auftreten. Alternativ ist auch eine Reinigung mit einem flüssigen Medium oder einem Festkörpermedium in Trockenform wie einem Pulver möglich.

Es kann auch vorgesehen sein, dass als Reinigungsmedium Aerosole bestehend aus zumindest einem Gas und einer oder mehreren Flüssigkeiten, trockener oder nasser Wasserdampf, Flüssigkeiten wie wässrige Lösungen auf alkalischer oder saurer Basis oder konzentrierte Lösungsmittel wie Schwefelsäure, Natronlauge oder dergleichen eingesetzt werden. Es können auch mehrere Reinigungsmedien gleichzeitig eingesetzt werden. Mit Vorteil wird das Reinigungsmedium durch eine Düse auf den Gegenstand aufgebracht, durch welche auch Druckluft aufgebracht werden kann.

Mit Vorteil ist vorgesehen, dass eine Reinigung mittels einer Druckluft erfolgt, welche unter einem Druck von weniger als 50 bar, insbesondere 1 bar bis 10 bar, auf den Gegenstand aufgebracht wird. Dadurch können Kanäle eines Wall-Flow-Filters besonders effektiv gereinigt werden. Die Druckluft wird meist bei Raumtemperatur auf kleine Teilbereiche bzw. einzelne Kanäle des Katalysators aufgebracht. Dabei hat es sich bewährt, wenn die Druckluft durch eine Düse mit hoher Geschwindigkeit austritt, sodass die Druckluft mit hohem Impuls auf den Katalysator auftrifft. Dadurch werden Beschädigungen des Katalysators aufgrund eines großflächig aufgebrachten Druckes vermieden. Insbesondere kann es zweckmäßig sein, wenn ein Gas oder ein Aerosol mit hoher Geschwindigkeit und hohem Impuls auf den Katalysator aufgebracht wird, um eine gute Reinigungswirkung zu erzielen. Wird als Düse eine Lavaldüse eingesetzt, kann die Luft auch mit Überschallgeschwindigkeit aufgebracht werden, um eine besonders gute Reinigungswirkung zu erzielen. Als günstig hat es sich herausgestellt, die Druckluft nicht bei einem konstanten Druck, sondern bei einem gepulst wechselnden Druck aufzubringen, vorzugsweise bei einer Pulsfrequenz von 0,5 Hz bis 200 Hz, insbesondere 1 Hz bis 100 Hz. Dabei kann zur Erreichung einer besonders guten Reinigungswirkung vorgesehen sein, dass auf die Luft bei jedem Puls ein Druckstoß aufgebracht wird, welcher die Luft wie bei einem Pulsotriebwerk auf Überschallgeschwindigkeit beschleunigt.

Durch die Düse können neben Druckluft auch Aerosole und weitere Reinigungsmedien aufgebracht werden, wie trockener und nasser Wasserdampf, wässrige Lösungen auf alkalischer oder saurer Basis und konzentrierte Lösungsmittel.

Bevorzugt erfolgt eine Reinigung des Gegenstandes mittels eines heißen Mediums, insbesondere eines heißen Gases. Dies ermöglicht ein effizientes Abbrennen von im Katalysator befindlichem Ruß. Dabei wird das heiße Medium, insbesondere ein Gas, normalerweise Luft, bei einer Temperatur von 100 °C bis 900 °C, üblicherweise 200 °C bis 700 °C, in den Katalysator eingebracht. Bevorzugt weist die Einrichtung neben einer Zuleitung für das heiße Gas auch eine Zuleitung für ein kaltes Gas wie Druckluft auf, sodass der Katalysator nach einer Reinigung mittels des heißen Gases durch eine Beaufschlagung mit kalter Druckluft schnell wieder gekühlt werden kann. Dadurch ist ein besonders schneller Wechsel von einem thermischen Reinigungsverfahren auf beispielsweise ein mechanisches Reinigungsverfahren möglich.

Es kann auch vorgesehen sein, dass vor, nach oder während einer Messung der katalytischen Reaktivität eine weitere Form einer Qualität des Gegenstandes gemessen wird. Wenn mit dem Verfahren neben der katalytischen Reaktivität eine weitere Form der Qualität ermittelt wird, kann eine besonders genaue Aussage über eine Funktion des Katalysators im Fahrzeug getätigt werden, beispielsweise wie hoch ein Druckverlust über den Katalysator in einem Abgastrakt ist. Günstig ist es, wenn auch die weiteren gemessenen Formen der Qualität mittels derselben Einrichtung gemessen werden, mit welcher die katalytische Reaktivität gemessen wird, insbesondere mit einer als integrierte Diagnose- und Reinigungseinrichtung ausgebildeten Einrichtung. Eine Messung der Qualität kann auch durch Messung eines Gewichtes des Katalysators bzw. Messung einer Gewichtsänderung während der Reinigung erfolgen.

Das Gewicht des Gegenstandes kann auch während einer Reinigung mit einem Reinigungsmedium wie Druckluft oder einem heißen Gas kontinuierlich gemessen werden. Weil eine sich aufgrund des Druckes, mit welchem das Reinigungsmediums auf den Gegenstand aufgebracht wird, ergebende Zusatzkraft das Messergebnis verfälschen würde, ist es günstig, wenn ein Messsignal einer Waage oder dergleichen über die Zeit statistisch aufbereitet und insbesondere geglättet wird, sodass der Messwert einfach um diese Zusatzkraft korrigiert werden kann. Dadurch ist ein unterbrechungsfreier Closed-Loop-Prozess bzw. ein geschlossener Regelkreis möglich, wobei eine Erfassung des Reinigungserfolges gleichzeitig mit der Reinigung erfolgt.

Darüber hinaus kann eine Qualitätsmessung auch mittels elektromagnetischer Strahlung, Neutronenstrahlung oder Mikrotomographie erfolgen. Eine Messung mittels einer Neutronenstrahlung hat sich als besonders günstig erwiesen, da dabei Asche aufgrund eines besonders starken Kontrastes sehr gut feststellbar ist. Es können auch eine Eigenfrequenz eines Substrates oder eine Schwingungsdämpfung des Substrates gemessen und zur Beurteilung der Qualität, insbesondere einer Aschebeladung, herangezogen werden.

Zweckmäßig ist es, dass die Messung der Qualität durch ein Medium oder eine elektromagnetische Strahlung erfolgt, welche durch die Öffnung ein- oder austritt. Dadurch kann auch die weitere Form der Qualität für jenen Teilbereich gemessen werden, für welchen die katalytische Reaktivität ermittelt wird. Beispielsweise kann hierzu in der Einrichtung eine Kamera derart angeordnet sein, dass mit dieser ein vor der Öffnung befindlicher Katalysator optisch erfasst werden kann. Es kann dadurch eine Verunreinigung einzelner Kanäle besonders genau erfasst werden, sodass beispielsweise eine Reinigung darauf abgestimmt werden kann.

Zur Messung einer Verunreinigung bzw. eines durch eine Verunreinigung verursachten Durchflusswiderstandes des Gegenstandes hat es sich als günstig erwiesen, wenn durch die Öffnung ein vorzugsweise gasförmiges Medium mit einem definierten Druck oder einem definierten Volumenstrom auf den Gegenstand aufgebracht und ein Gegendruck und/oder ein Druckverlust und/oder eine Änderung des Volumenstromes über den Katalysator gemessen werden. Die Messung des Gegendruckes kann beispielsweise mittels eines in der Vorrichtung angeordneten Drucksensors erfolgen. Alternativ oder ergänzend kann auch ein Sensor vorgesehen sein, mit welchem ein Durchfluss messbar ist, um so auf einen Gegendruck des Katalysators zu schließen. Der Gegendruck kann während einer Beaufschlagung des Katalysators mit dem Prüfmedium oder in einem gesonderten Diagnoseschritt gemessen werden, in welchem ein Gas, vorzugsweise Luft, mit einem definierten Druck auf die Stirnseite des Katalysators aufgebracht wird. Weiter ist mit Vorteil vorgesehen, dass im Gehäuse ein Temperatursensor und/oder ein Kohlenwasserstoffsensor und/oder ein Durchflusssensor und/oder ein Staudrucksensor und/oder ein Sensor zur Erfassung eines statischen Druckes vorgesehen sind, um relevante Daten eines auf den Katalysator durch die Öffnung aufgebrachten Mediums besonders genau zu erfassen. Es kann dann mit der Einrichtung wechselweise ein Reinigen und ein Prüfen des Katalysators mittels abwechselnden Aufbringens eines Reinigungs- und Prüfmediums durch die Öffnung durchgeführt werden.

Üblicherweise erfolgt eine Wiederaufbereitung des Katalysators wechselweise durch eine mehrere Minuten dauernde Reinigung des Katalysators, auf welche eine wenige Minuten oder Sekunden dauernde Phase folgt, in welcher eine Qualität des Katalysator gemessen wird. Diese beiden Phasen werden abwechselnd wiederholt, bis ein Abbruchkriterium erreicht ist, beispielsweise keine weitere Qualitätsverbesserung erreichbar ist. Zumeist wird hierzu eine Reinigung mit einem Druck von 1 bar bis 10 bar, woraus über eine Düse ein Luftstrom mit hoher Geschwindigkeit erzeugt wird, für etwa vier Minuten durchgeführt, wonach ein Druckverlust über den Katalysator sektional bzw. in einem Teilbereich oder im Vollstrom bei einem Volumenstrom mit geringerem Druck gemessen wird, wobei der Druck und der Volumenstrom etwa einem Abgasstrom eines Verbrennungsmotors entsprechen. Dieser Druckverlust wird beispielsweise für etwa zwei Minuten gemessen, wobei ein gemessener Druckverlust bei üblicherweise etwa 0,001 bar bis 0,5 bar liegen kann.

Zweckmäßigerweise wird ein struktureller Zustand des Gegenstandes erfasst. Dies kann zum einen optisch durch eine Kamera oder ein 3D-Geometrieerfassungssystem erfolgen. Zum anderen kann ein struktureller Zustand des Katalysators auch durch ein Abtasten des Katalysators mittels eines Laser-Scanners, eines mechanischen Tasters oder mittels eines elektronischen Kontakt-Tasters erfolgen, wobei eine Kontur ermittelt und gegebenenfalls mit einer Sollkontur verglichen wird. Darüber hinaus kann ein struktureller Zustand erfasst werden, indem vorzugsweise mittels der Einrichtung eine definierte Kraft auf Bereiche des Katalysators aufgebracht und eine Verformung wie eine Durchbiegung oder eine Verschiebung gemessen wird. Dadurch kann auch eine Festigkeit eines Sitzes eines in einem Canning mittels einer Lagermatte verpressten Substrates gemessen werden. Weiter kann ein struktureller Zustand sowie eine Haltewirkung der Lagermatte durch eine Hysteresekurve zwischen einer Belastungskurve und einer Entlastungskurve ermittelt werden. Dabei wird eine Belastungskraft mit Vorteil über einen Sensor an einer Krafteinleitungsposition gemessen, beispielsweise durch eine Strommessung, eine Drehmomentmessung bei einer die Einrichtung antreibenden Spindel, einen Dehnmessstreifen oder dergleichen. Eine Reaktionskraft wird normalerweise ebenfalls über einen Sensor wie eine Waage oder einen Dehnmessstreifen gemessen. Zur Bestimmung der Haltekraft bzw. der Haltewirkung der Lagermatte kann dann eine Hysterese der Reaktionskraft bezogen auf die Belastungskraft herangezogen werden.

Bevorzugt wird die Einrichtung durch einen mehrachsigen Antrieb zu verschiedenen Positionen des Gegenstandes bewegt, um einzelne Teilbereiche zu vermessen und/oder zu reinigen. Ein besonders flexibles Verfahren ist möglich, wenn die Einrichtung jeweils in drei Richtungen translatorisch und in drei Richtungen rotatorisch bewegbar ist, beispielsweise mittels eines kartesischen Roboters. Es kann auch vorgesehen sein, dass Positionen bzw. Bewegungen der Einrichtung gespeichert werden, sodass Positionen wiederholt angefahren werden können, beispielsweise um diese gezielt nach einer Reinigung zu diagnostizieren. Dadurch kann an jeder Position des Katalysators, welcher in der Regel auf einem licht- und gasdurchlässigen Sockel in der Vorrichtung angeordnet ist, eine Qualität gemessen und eine Reinigung durchgeführt werden. Normalerweise ist die Einrichtung mit dem Antrieb auch kraftgesteuert bewegbar, sodass unter Messung einer für eine Bewegung erforderlichen Kraft auch eine Abtastung und eine Erfassung eines strukturellen Zustandes mit der Einrichtung einfach ausführbar sind.

Die weitere Aufgabe wird erfindungsgemäß dadurch gelöst, dass bei einer Vorrichtung der eingangs genannten Art zur Messung einer katalytischen Reaktivität eine Einrichtung mit einem eine Öffnung aufweisenden Gehäuse, eine Regeleinrichtung sowie ein Sensor vorgesehen sind, wobei mit der Regeleinrichtung ein Prüfmedium definierter Zusammensetzung durch die Öffnung transportierbar ist und wobei mit dem Sensor zumindest eine Konzentration eines reduzierten oder oxidierten Bestandteiles des Prüfmediums messbar ist. Als Prüfmedium kann beispielsweise Propangas, Kohlenmonoxid oder Stickstoffmonoxid, ein Aerosol oder eine Prüfflüssigkeit eingesetzt werden. Dadurch ist auf einfache Weise eine Messung der katalytischen Reaktivität möglich. Die Regeleinrichtung umfasst normalerweise einen Kompressor, mit welchem das Prüfgas unter einem definierten Druck und/oder bei einem definierten Volumenstrom durch die Öffnung transportierbar ist. Um das vorzugsweise chemisch reaktive Prüfgas der Einrichtung zuzuführen, sind in der Regel ein Prüfgasspeicher wie ein Propangastank und eine Prüfgasleitung mit der Einrichtung verbunden. Üblicherweise ist es mit der Regeleinrichtung auch möglich, eine Temperatur des Prüfgases zu verändern, um verschiedene Betriebszustände eines Fahrzeuges zu simulieren. Ein oder mehrere Sensoren zur Erfassung von im Gegenstand umgesetzten bzw. reduzierten oder oxidierten Gasen wie Kohlenwasserstoffen oder Stickstoffdioxid sind bevorzugt an einer Stirnseite des Katalysators gegenüberliegend von jener Stirnseite positioniert, an welcher das Prüfgas in den Katalysator eingebracht wird. Jedoch können diese Sensoren auch an einer alternativen Position angeordnet sein, wenn diese alternative Position von einem Gas um- oder durchströmt wird, welches den Katalysator passiert hat. Anstatt einer direkten Messung umgesetzter Bestandteile können selbstverständlich auch nicht umgesetzte Bestandteile des Gases gemessen werden, um unter Berücksichtigung der Zusammensetzung des Prüfgases auf eine katalytische Reaktivität des Katalysators zu schließen. Umgesetzte Bestandteile werden in diesem Fall indirekt ermittelt.

Eine besonders genaue Analyse des Katalysators bezüglich erreichbarer Abgasgrenzwerte bei Einsatz in einem Fahrzeug ist möglich, wenn ein einem Abgas eines Dieselmotors entsprechendes Prüfgas eingesetzt wird. Dadurch wird ein Einsatz in einem Fahrzeug simuliert. Üblicherweise wird für eine Prüfung der Funktion des Gegenstandes eine Abgasstrommenge mit einer ähnlichen Temperatur und einer ähnlichen Geschwindigkeit wie in einem Dieselmotor eingesetzt. Vorzugsweise wird eine derartige Prüfung mit einem einem Dieselmotor entsprechenden Abgas sektional durchgeführt, wobei nur ein Teilbereich des Gegenstandes mit dem Prüfgas beaufschlagt wird. Dadurch können im jeweiligen Teilbereich oder in einem gesamten Querschnitt die für einen Gegenstand wie einen Filter oder Katalysator funktionsrelevanten Luftwechselzahlen von etwa 50000 1/h bei der Prüfung erreicht werden.

Darüber hinaus kann auch ein Kohlenwasserstoffsensor vorgesehen sein, um vorhandene Rückstände von Brennstoff bzw. Motoröl zu bestimmen. Dies hat sich bewährt, um eine Reinigungsstrategie zu adaptieren, welche ohne Änderungen nicht für einen mit Motoröl verunreinigten Katalysator anwendbar wäre, beispielsweise eine thermische Reinigung. Weiter kann aufgrund ermittelter Rückstände auf eine Beschädigung eines Fahrzeuges geschlossen werden, in welchem der Katalysator eingebaut war.

Um eine Reinigung des Gegenstandes auf einfache Weise und direkt abhängig von einer gemessenen katalytischen Reaktivität durchzuführen, ist die Einrichtung bevorzugt als integrierte Diagnose- und Reinigungseinrichtung ausgebildet. Vorzugsweise erfolgt eine Messung der Qualität und eine Reinigung mittels derselben Düse bzw. durch dieselbe Öffnung, sodass eine Repositionierung der Einrichtung zwischen Diagnose und Reinigung nicht erforderlich ist.

Es kann auch vorgesehen sein, dass die Vorrichtung, insbesondere die Einrichtung, zur Reinigung des Gegenstandes mit einem unter Druck stehenden Medium, insbesondere Druckluft, mit einer Druckluftzuleitung und einem Druckluftventil ausgebildet ist.

Üblicherweise münden die Prüfgasleitung und eine für eine Zuführung einer Druckluft ausgebildete Druckluftleitung in ein gemeinsames Gehäuse der Einrichtung, von welchem aus die Druckluft und das Prüfgas durch die Öffnung aus der Einrichtung austreten können, um den Katalysator mit dem jeweiligen Gas zu beaufschlagen. Dabei kann das Prüfgas auch während einer Reinigung des Katalysators mittels Druckluft oder mittels Unterdruck aufgebracht werden. Dadurch können gleichzeitig eine Qualität des Katalysators gemessen bzw. der Katalysator diagnostiziert und eine Reinigung durchgeführt werden.

Mit Vorteil ist die Vorrichtung, insbesondere die Einrichtung, zur thermischen Reinigung des Gegenstandes ausgebildet. In der Regel ist hierzu durch die Vorrichtung, insbesondere durch die Einrichtung, ein heißes Gas auf einen vor der Öffnung positionierten Gegenstand aufbringbar. Dies ermöglicht ein reinigendes Abbrennen von einem im üblicherweise als Wall-Flow-Filter ausgebildeten Katalysator befindlichen Ruß. Die thermische Reinigung kann auch durch Einbringen von Wärme in den Katalysator mittels Wärmestrahlung oder Induktion erfolgen. Günstig ist es jedoch, wenn ein heißes Gas bei einer Temperatur von 100 °C bis 900 °C auf den Katalysator aufgebracht wird. Hierzu sind üblicherweise mit der Einrichtung eine Heißgasleitung verbunden sowie ein entsprechendes Ventil bzw. eine Heißgasregeleinrichtung vorgesehen. Durch die Heißgasleitung ist das heiße Gas dem Gehäuse zuführbar, von welchem es bevorzugt durch die Öffnung auf den Katalysator aufgebracht werden kann. Ein thermisches Reinigen sowie ein Regenerieren des Filters können auch unter Nutzung des Sauerstoffs einer Druckluftleitung erfolgen. Dadurch kann eine Sauerstoffzufuhr auf einfache Weise kontrolliert werden, sodass die Regeneration geregelt ablaufen kann. Mit einer derartigen Diagnose- und Reinigungseinrichtung ist ein gleichzeitiges oder abwechselndes Messen der katalytischen Reaktivität und thermisches Reinigen des Katalysators möglich. Dadurch kann eine thermische Reinigung beispielsweise unter Messung der katalytischen Reaktivität durchgeführt werden, bis die katalytische Reaktivität trotz anhaltender Reinigung nicht weiter verbesserbar ist. Zur Regelung der thermischen Reinigung ist mit Vorteil ebenfalls eine Regelung vorgesehen, um Temperatur und Volumenstrom des heißen Gases zu regeln.

Es kann auch vorgesehen sein, dass die Vorrichtung, insbesondere die Einrichtung, einen Drucksensor umfasst, mit welchem ein Gegendruck und/oder ein Druckverlust messbar sind. Dies ermöglicht neben einem Messen der katalytischen Reaktivität, welche eine chemische Funktion des Katalysators kennzeichnet, ein Erfassen eines Gegendruckes des Katalysators, welcher eine physikalische Funktion bzw. eine Verstopfung des Katalysators mit Verunreinigungen angibt. Mit zunehmender Verschmutzung des Katalysators steigt ein Gegendruck bzw. ein Druckverlust über den Katalysator bei gleichem Volumenstrom und gleicher Temperatur, sodass ein geringerer Druckverlust einem höheren Reinigungsgrad des Katalysators entspricht, welcher üblicherweise als mit einer katalytischen Beschichtung versehener Wall-Flow-Filter ausgebildet ist. Alternativ oder ergänzend können ein Volumenstromsensor, ein Massenstromsensor und/oder eine Lambdasonde vorgesehen sein. Die jeweiligen Sensoren können dabei in der Einrichtung, vorzugsweise im in der Regel rohrförmigen Gehäuse, und/oder in einer Strömungsrichtung hinter dem Katalysator angeordnet sein, um auch einen Druck eines aus dem Katalysator austretenden Gases zu messen. Zur Messung des Druckverlustes kann der Katalysator mit einem Gasstrom beaufschlagt werden, welcher bei einem Durchströmen des Katalysators einen Gegendruck von 0,001 bar bis 1 bar erzeugt. Alternativ oder ergänzend zu einem Drucksensor kann auch ein Durchflusssensor vorgesehen sein, um einen Durchflusswiderstand zu bestimmen.

Bevorzugt weist die Vorrichtung, insbesondere die Einrichtung, zur optischen Erfassung eines strukturellen Zustandes des Gegenstandes eine Kamera oder einen Laser-Scanner auf. Üblicherweise ist mit der Kamera durch die Öffnung ein struktureller Zustand des Katalysators optisch erfassbar. Dies ermöglicht auf einfache Weise eine optische Erfassung eines Teilbereiches des Katalysators, bei welchem die katalytische Reaktivität gemessen wird. Beispielsweise kann dadurch festgestellt werden, dass starke strukturelle Schäden am Katalysator vorliegen, sodass eine Reinigung abgebrochen werden muss. In dieser Weise werden unnötige Kosten vermieden. Für eine Fokussierung der Kamera ist es vorteilhaft, wenn die Kamera bzw. eine bewegbar angeordnete Optik der Kamera in einer Längsrichtung des Gehäuses verschiebbar ist, sodass diese gegebenenfalls auch durch die Öffnung aus dem Gehäuse bewegt werden kann. Hierzu ist die Kamera bzw. die bewegbare Optik der Kamera üblicherweise mit einem kleineren Durchmesser ausgebildet als die Öffnung.

Normalerweise ist die Einrichtung zur variablen Positionierung in der Vorrichtung mehrachsig, insbesondere kraftgesteuert, bewegbar angeordnet. Dies ermöglicht eine besonders flexible Positionierung sowie eine Messung der Qualität des Katalysators an verschiedenen Positionen. In der Regel weist die Öffnung einen kleineren Querschnitt auf als der Katalysator, welcher in der Regel einen Durchmesser von 100 mm bis 400 mm, insbesondere etwa 300 mm, und eine Länge von 50 mm bis 500 mm, insbesondere etwa 250 mm, aufweist. Um einzelne Teilbereiche des Katalysators besonders genau diagnostizieren und reinigen zu können, ist es günstig, wenn die Öffnung einen Durchmesser von weniger als 20 % des Durchmessers des Katalysators aufweist, in der Regel weniger als 10 %. Bevorzugt beträgt ein Durchmesser der Öffnung weniger als 20 mm, üblicherweise 2 mm bis 10 mm. Mit Vorteil ist die Öffnung als Kontaktfläche zum Katalysator ausgebildet und weist einen Querschnitt von weniger als 50 % einer Stirnfläche des Katalysators auf. Mit Vorteil ist die Öffnung derart ausgebildet, dass mit einer minimalen Anzahl nebeneinander liegender Messflächen, welche mit der Einrichtung nacheinander angefahren werden, eine möglichst vollständige Vermessung der Stirnfläche möglich ist. In diesem Zusammenhang hat sich eine Kontaktfläche in Form eines etwa gleichseitigen Dreieckes als günstig erwiesen, wobei eine Seite des Dreieckes als Kreisbogen ausgebildet ist, sodass die Kontaktfläche etwa einem Sechsel der Stirnfläche entspricht. Dadurch muss die Einrichtung nur zu sechs Positionen bewegt werden, um den Katalysator vollständig zu reinigen.

Eine besonders hohe Messgenauigkeit wird erreicht, wenn mit dem Gehäuse eine Messglocke verbunden ist, welche die Öffnung um vorzugsweise mindestens 1 mm überragt. In der Regel weist die normalerweise konzentrisch zum Gehäuse und zur Düse angeordnete Messglocke eine umlaufende, vorzugsweise aus einem Elastomer bestehende Dichtung auf, sodass gewährleistet ist, dass ein aus der Öffnung austretendes Gas in Kanäle des Katalysators eindringt. Ein durch die Einrichtung transportiertes Prüf- oder Reinigungsmedium tritt im Wesentlichen an der Düse aus. Jedoch ist die Messglocke durch Spülluftöffnungen mit dem Gehäuse verbunden, um unterschiedliche Gaszusammensetzungen in der Messglocke und im Gehäuse zu vermeiden.

Bei einer Messung der katalytischen Reaktivität wird die Dichtung der Messglocke auf die zu untersuchende Oberfläche, in der Regel eine Stirnseite eines Katalysators, gepresst, vorzugsweise mit einer Kraft von 20 N bis 70 N. Die Kraft ist in der Regel abhängig von einer Größe einer Messfläche, einem Innendruck sowie einer Dichtungspressung. Als günstig hat sich eine Kraft von 1 N/cm² bis 100 N/cm² bei einem Innendruck von etwa 5 N/cm² erwiesen. Die angegebenen Kräfte sind jeweils bezogen auf eine Lateralfläche bzw. Kontaktfläche der Messglocke mit der Stirnseite des Katalysators. Alternativ kann die Messglocke auch von der Katalysatoroberfläche beabstandet sein, um die gesamte Oberfläche mit dem Prüfgas zu beaufschlagen.

Während eines Reinigens wird die Messglocke normalerweise vom Katalysator abgehoben, sodass aus der Düse ausströmende Luft ohne statischen Druck, jedoch mit einem hohen Impuls auf die Oberfläche und in die in die Stirnseite des Katalysators mündenden Kanäle strömen kann. Durch ein Bewegen des Gehäuses über den Katalysator können sämtliche Kanäle in aufeinanderfolgenden Schritten gereinigt werden bzw. können für sämtliche Kanäle eine oder mehrere Formen der Qualität ermittelt werden. Als Formen der Qualität können je nach Katalysator insbesondere ein struktureller Zustand, ein Gegendruck, ein Durchflusswiderstand, eine physikalische Funktion und eine chemische Funktion wie eine katalytische Reaktivität angesehen werden.

Für eine thermische Reinigung mittels eines heißen Gases liegt die Messglocke bevorzugt dicht auf der Oberfläche auf, sodass das heiße Gas mit einem geringen Gegendruck in den Katalysator bzw. in einzelne Teilbereiche des Katalysators eingeleitet werden kann.

Dabei kann auch während des Reinigens mit einem heißen Gas oder dergleichen bei dicht aufgesetzter Messglocke eine Qualität des Gegenstandes ermittelt werden, indem ein Gegendruck des Gegenstandes gemessen und ein Volumenstrom des heißen Gases erhöht wird, bis sich ein Gegendruck von 0,001 bar bis 1 bar einstellt. Mit zunehmendem Reinigungsgrad ist zur Erreichung eines entsprechenden Gegendruckes ein höherer Volumenstrom erforderlich, sodass die Qualität durch den Volumenstrom bestimmt werden kann.

Die Messglocke kann auch mit einem Kraft- und/oder einem Bewegungssensor ausgebildet sein, um eine Geometrie des Katalysators zu vermessen. Hierzu kann die Messglocke auch bewegbar mit dem Gehäuse verbunden sein. Für eine Messung wird dann die Messglocke mit definierter Kraft auf den Katalysator gedrückt und eine Verformung gemessen. Daraus können auf besonders einfache Weise unter anderem Durchmesser, Höhe und Position des Katalysators auf dem Sockel bestimmt werden.

Bevorzugt ist die Einrichtung in einem abgeschlossenen Stationsgehäuse angeordnet, wobei insbesondere eine mit der Einrichtung und dem Stationsgehäuse jeweils dichtend verbundene flexible Membran zur hermetischen Trennung von Bereichen im Stationsgehäuse vorgesehen ist. Dies verhindert auf einfache Weise eine Verunreinigung einer Umgebung mit aus dem Katalysator gelösten Verunreinigungen oder Prüf- oder Reinigungsmedien. Wenn die Einrichtung bewegbar ausgebildet in einem geschlossenen ortsfesten Gehäuse angeordnet ist, ist es günstig, wenn ein flexibles, dichtendes Element, insbesondere eine Membran oder Flächenmembran derart starr und dicht mit einem bewegbaren Teil der Einrichtung und dem Gehäuse verbunden ist, dass ein Bereich bzw. ein Raum, in welchem der Katalysator für eine Messung positioniert wird, von einem Raum hermetisch getrennt ist, in welchem ein Antrieb der Einrichtung und/oder eine Mechanik für ein Bewegen der Einrichtung angeordnet sind. Dadurch werden Beschädigungen des Antriebes bzw. der Mechanik durch Verunreinigungen bzw. Prüf- oder Reinigungsmedien auf einfache Weise verhindert. Gleichzeitig wird durch die flexible Flächenmembran eine Dichtheit trotz einer Relativbewegung der Einrichtung zur Vorrichtung gewährleistet. Alternativ zu einer Flächenmembran oder ergänzend kann ein starkes Druckgefälle zwischen einem Arbeitsraum, in welchem der Katalysator gereinigt wird, und einer Umgebung vorgesehen sein, welches beispielsweise durch ein starkes Absauggebläse erreicht werden kann.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine Einrichtung für eine erfindungsgemäße Vorrichtung samt einem Teil eines Katalysators in einer Schnittdarstellung;
Fig. 2 eine erfindungsgemäße Vorrichtung;
Fig. 3 Light-off-Kurven eines neuen und eines gebrauchten Katalysators.

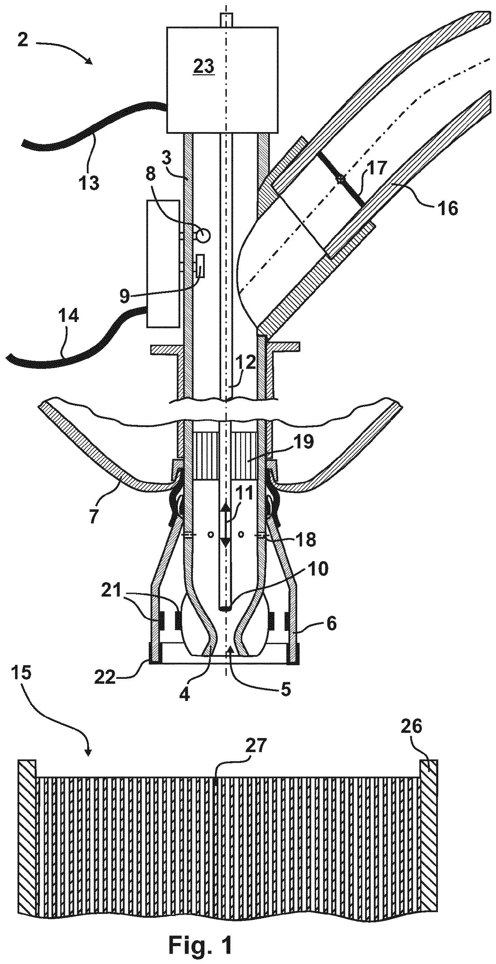

Fig. 1 zeigt schematisch eine Einrichtung 2 für eine erfindungsgemäße Vorrichtung 1 zur Diagnose eines Gegenstandes wie eines Katalysators 15 oder eines Filters, insbesondere eines Partikelfilters, sowie einen Teil eines als Wall-Flow-Filter ausgebildeten Katalysators 15. Die Einrichtung 2 weist ein Gehäuse 3 auf, mit welchem eine Zuleitung 16 verbunden ist, um ein Prüf- oder Reinigungsmedium zuzuführen. Zur Messung einer katalytischen Reaktivität des Katalysators 15 wird der Einrichtung 2 ein Prüfmedium, vorzugsweise ein Prüfgas wie Kohlenmonoxid oder Propangas durch die Zuleitung 16 zugeführt. Um eine Menge sowie eine Temperatur des zugeführten Prüfgases insbesondere automatisch zu regeln, ist eine nicht dargestellte Regeleinrichtung vorgesehen, welche mit Sensoren der Vorrichtung 1 sowie einer Prozesssteuerung verbunden ist. Die dargestellte Einrichtung 2 weist in der Zuführleitung ein Ventil 17 oder eine Drosselklappe auf, mit welchem eine Menge des zugeführten Mediums regulierbar ist. Zur Beaufschlagung eines Katalysators 15 mit dem Prüfmedium ist an einem unteren Ende des Gehäuses 3 eine Düse 4 vorgesehen, durch welche das Medium üblicherweise mit einem Druck von bis zu 20 bar, vorzugsweise 0,5 bar bis 10 bar, und einer Geschwindigkeit von bis zu 330 m/s austritt. Sofern die Düse 4 als Lavaldüse ausgebildet ist, kann auch eine höhere Geschwindigkeit in einem Überschallbereich erzielt werden. Eine Öffnung 5 der Düse 4 weist im dargestellten Ausführungsbeispiel einen Durchmesser von etwa 6 mm auf. Die Einrichtung 2 ist zur Reinigung von aus Fahrzeugen ausgebauten Katalysatoren 15 vorgesehen, welche in der Regel einen Durchmesser von etwa 300 mm aufweisen. Mit einer entsprechend kleinen Querschnittsfläche der Öffnung 5 können daher einzelne Teilbereiche des Katalysators 15 bzw. Kanäle eines Substrates 27 des Katalysators 15 gezielt geprüft und gereinigt werden. Üblicherweise wird der Katalysator 15 mit der Düse 4 gereinigt, während dieser mit der Messglocke 6 diagnostiziert wird. In der Regel wird hierzu ein heißes Gas über die Messglocke 6 auf den Katalysator 15 aufgebracht, während ein Reinigungsmedium wie Druckluft mit hohem Druck durch die Düse 4 aufgebracht wird.

Zur Reinigung wird ein Reinigungsmedium, beispielsweise Druckluft, Trockendampf oder ein heißes Gas, eingesetzt. Dieses Reinigungsmedium tritt nach einem Durchströmen des Gehäuses 3 ebenfalls durch die Öffnung 5 der Düse 4 aus, sodass mit derselben Düse 4 ein Prüfmedium und ein Reinigungsmedium aufgebracht werden können. Es kann auch ein Prüfmedium oder ein Reinigungsmedium nur durch die Messglocke 6 aufgebracht werden, wenn die Messglocke 6 eine separate Zuleitung 16 aufweist und/oder eine Leitungsweiche vorgesehen ist, um zwischen einem Austritt des Reinigungsmediums durch die Düse 4 und einem Austritt der Reinigungsmediums durch Messglocke 6 wählen zu können. Es kann auch vorgesehen sein, dass die Einrichtung 2 mehrere Zuleitungen 16 aufweist, wobei gesondert beispielsweise eine Heißgasleitung und eine Druckluftleitung vorgesehen sein können. Um in eine Strömung im Gehäuse 3 gezielt einen Drall einzubringen oder einen Drall zu reduzieren, ist eine Drallsteuerung 19 vorgesehen. Weiter ist in einem unteren Bereich im Gehäuse 3 eine Kamera 10 bzw. eine Optik einer Kamera 10 vorgesehen, mit welcher durch die Öffnung 5 ein Bild eines unterhalb der Öffnung 5 angeordneten Katalysators 15 erfassbar ist. Wie abgebildet ist der Katalysator 15 derart unter der Einrichtung 2 positioniert, dass eine Stirnfläche des Katalysators 15, in welche Kanäle münden, gegenüber der Öffnung 5 liegt. Dadurch kann ein mit der Einrichtung 2 untersuchter Katalysator 15 sowohl hinsichtlich einer katalytischen Reaktivität als auch optisch durch die Kamera 10 untersucht werden, wobei ein struktureller Zustand einzelner Kanäle beurteilt werden kann.

Wie ersichtlich ist die Kamera 10 auf einer etwa zylindrischen Führung 12 koaxial und konzentrisch im vorzugsweise rohrförmigen Gehäuse 3 angeordnet. Dadurch kann die Kamera 10 entlang einer Kamerabewegungsrichtung 11 axial verschoben werden. Die Kamera 10 kann dadurch auch durch die Öffnung 5 aus dem Gehäuse 3 bewegt werden, um beispielsweise einzelne Zellen oder Kanäle des Katalysators 15 besonders genau zu untersuchen. Darüber hinaus kann eine Verschiebung der Kamera 10 auch zweckmäßig sein, um eine Fokussierung zu verbessern. Eine Auswertung des mit der Kamera 10 aufgenommenen Bildes kann direkt in einer in einem oberen Bereich positionierten Bildauswerteeinrichtung 23 erfolgen. Hier kann auch ein Bildsensor angeordnet sein, in welchem ein digitales Bild entsteht. Zur Übertragung des Bildes an eine Prozesssteuerung und/oder eine Dokumentation ist beispielhaft eine Datenleitung 13 dargestellt. Alternativ kann die Kamera 10 auch außerhalb des Gehäuses 3 bzw. nicht koaxial im Gehäuse 3 angeordnet sein, sodass sich die Kamera 10 neben der Düse 4 befindet.

Weil mit derselben Düse 4 eine Diagnose und eine Reinigung des Katalysators 15 erfolgen kann, ist ein besonders rascher Wechsel von einem Diagnoseverfahren zu einem Reinigungsverfahren möglich. Mit der Einrichtung 2 ist auch eine gleichzeitige Reinigung und Diagnose eines Katalysators 15 möglich, wenn beispielsweise der Katalysator 15 mittels Druckluft mechanisch gereinigt wird, wobei gleichzeitig ein sich aufgrund des Druckes einstellender Volumenstrom oder ein sich aufgrund eines Volumenstromes einstellender Druck gemessen wird. Ein zunehmender Volumenstrom zeigt eine Verbesserung eines Reinigungsgrades an, da ein Gegendruck des Katalysators 15 sinkt. Zur Erfassung verschiedener Eigenschaften eines durch das Gehäuse 3 strömenden Prüf- oder Reinigungsmediums sind im Gehäuse 3 Sensoren vorgesehen. In Fig. 1 sind beispielhaft ein Temperatursensor 8 und ein Drucksensor 9 dargestellt. Darüber hinaus können auch Sensoren zur Messung eines dynamischen Druckes, einer Gaszusammensetzung, eines Volumenstromes oder dergleichen vorgesehen sein. Zur Übertragung der Messdaten an eine Prozesssteuerung oder einen Leitrechner ist eine Messleitung 14 dargestellt.

In einem unteren Bereich des Gehäuses 3 ist eine elastisch verformbare Messglocke 6 konzentrisch zum Gehäuse 3 bewegbar angeordnet, welche an einem unteren Ende einen Durchmesser von etwa 50 mm aufweist und konzentrisch und koaxial zur Düse 4 positioniert ist. Wie ersichtlich überragt die Messglocke 6 die Düse 4 um vorzugsweise zumindest 1 mm und weist an einem unteren Ende eine umlaufende Dichtung 22 auf, durch welche bei einem Anstellen der Einrichtung 2 an einer Stirnfläche des Katalysators 15 eine dichte Verbindung zwischen der Einrichtung 2 und dem Katalysator 15 hergestellt wird. Dadurch kann gewährleistet werden, dass ein aus der Düse 4 ausströmendes Medium den Katalysator 15 passieren muss, wodurch beispielsweise ein Gegendruck oder ein Druckverlust sehr genau gemessen werden können. Weiter wird dadurch ein direkter Kontakt der Düse 4 mit dem Substrat 27 verhindert, wodurch Beschädigungen des Substrates 27 sowie der Düse 4 vermieden werden. Ersichtlich ist, dass mehrere Spülluftöffnungen 18 vorgesehen sind, welche einen Gasaustausch zwischen dem Gehäuse 3 und der Messglocke 6 ermöglichen. Alternativ kann die Düse 4 auch außerhalb der Messglocke 6 neben der Messglocke 6 angeordnet sein, um beispielsweise einen Teilbereich des Katalysators 15 mittels der Düse 4 durch Druckluft zu reinigen und einen weiteren Teilbereich des Katalysators 15 gleichzeitig mittels der Messglocke 6 zu diagnostizieren. Dabei kann auch eine gesonderte Zuleitung 16 für die Messglocke 6 vorgesehen sein, sodass die Messglocke 6 auch hydraulisch vom Gehäuse 3 getrennt ist.

Bei einer Reinigung des Katalysators 15 mittels Druckluft wird die Messglocke 6 vorzugsweise einige Millimeter vom Katalysator 15 abgehoben, sodass die Druckluft lediglich mit einem hohen Impuls, jedoch ohne statischen Druck, auf die Oberfläche und in die Kanäle strömen kann. Ein Abstand zwischen der Einrichtung 2 und dem Katalysator 15 ermöglicht auch eine Relativbewegung zwischen der Einrichtung 2 und dem Katalysator 15, wie dies bei einer Reinigung üblicherweise erfolgt, um die einzelnen Teilbereiche bzw. Kanäle des Katalysators 15 sequenziell zu reinigen.

Bei einer thermischen Reinigung wird durch die Zuleitung 16 heiße Luft, vorzugsweise bei einer Temperatur von 100 °C bis 900 °C, insbesondere 200 °C bis 700 °C, geleitet wobei die Messglocke 6 normalerweise mit der Dichtung 22 dicht auf der Katalysatoroberfläche anliegt. Dabei wird heiße Luft mit einem geringen Gegendruck durch einen Teil des Katalysators 15 geleitet. Stromabwärts des Katalysators 15 angeordnete Sensoren sind dann üblicherweise vorgesehen, um einen Druck, eine Temperatur und gegebenenfalls einen Grad einer Regeneration mittels eines Kohlenwasserstoffsensors 28 oder eines Kohlenmonoxidsensors zu messen.

Ein Prüf- oder Reinigungsmedium wird mit Vorteil nach einem Passieren des Katalysators 15 gereinigt, um eine Verunreinigung einer Umgebung zu verhindern. Dabei wird ein heißes Prüf- oder Reinigungsmedium in der Regel gekühlt, bevor dieses gereinigt wird.

Um die Einrichtung 2 zu verschiedenen Positionen des Katalysators 15 zu bewegen, ist ein nicht dargestellter Antrieb vorgesehen, bevorzugt ein kartesischer Roboter oder eine Drehgelenkssteuerung zur Bewegung der Einrichtung in einem Polarkoordinatensystem, mit welchem die Einrichtung 2 in drei Richtungen translatorisch und in drei Richtungen rotatorisch bewegbar ist. Dadurch kann die Einrichtung 2 an jede Position des Katalysators 15 bewegt werden, um diese zu reinigen oder zu prüfen. Weiter kann durch eine Bewegung der Einrichtung 2 entlang des Katalysators 15 eine Geometrie bzw. eine Kontur des Katalysators 15 auch einfach vermessen werden, wobei üblicherweise Kontaktsensoren oder Kraftmesssensoren vorgesehen sind. Bei der dargestellten Ausführung ist die Messglocke 6 mit dem Gehäuse 3 derart bewegbar verbunden, dass eine seitliche Kraft auf die Messglocke 6 zu einem Schließen eines Kontaktschalters 21 führt. Dadurch sind auch Kräfte in einer horizontalen Richtung erfassbar, welche auf eine Seitenkante des Katalysators 15 bzw. ein das Substrat 27 überragendes Canning 26 schließen lassen. Dabei kann auch eine Position des Katalysators 15 in der Vorrichtung 1 genau erfasst werden.

Um eine Verunreinigung von einem oberen Teil des Stationsgehäuses 20 zu verhindern, in welchem die Bildauswerteeinrichtung 23 und normalerweise der Antrieb positioniert sind, ist eine Flächenmembran 7 vorgesehen. Die Flächenmembran 7 ist mit einem bewegbaren Teil der Einrichtung 2 sowie einem dichten Stationsgehäuse 20 dicht verbunden, in welchem die Einrichtung 2 angeordnet ist. Zur Aufnahme von Relativbewegungen zwischen der Einrichtung 2 und dem Stationsgehäuse 20 ist die Flächenmembran 7 flexibel ausgebildet. Somit wird durch das Stationsgehäuse 20 eine Verunreinigung einer Umgebung durch aus dem Katalysator 15 gelöste Verunreinigungen sowie Prüf- oder Reinigungsmedien verhindert. Durch die Flächenmembran 7 wird eine Verunreinigung eines oberen Teiles des Stationsgehäuses 20 durch im unteren Teil befindliche Verunreinigungen und Medien verhindert. Eine Entsorgung von aus dem Katalysator 15 gelösten Verunreinigungen sowie Prüf- und Reinigungsmedien erfolgt durch eine Absaugung, welche mit einem unteren Teil des Stationsgehäuses 20 verbunden ist, in welchem der Katalysator 15 für eine Diagnose und eine Reinigung positioniert wird.

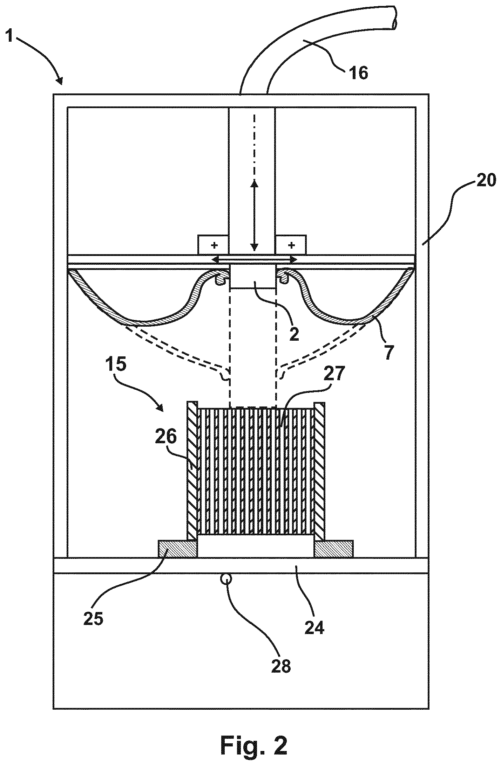

Fig. 2 zeigt eine als Diagnose- und Reinigungsstation ausgebildete Vorrichtung 1, in welcher ein Katalysator 15 für eine Diagnose und eine Reinigung angeordnet ist. Weiter ist in einem Stationsgehäuse 20 der Vorrichtung 1 eine Einrichtung 2 wie vorstehend beschrieben mehrachsig bewegbar angeordnet. Schematisch sind zwei vertikale Positionen der Einrichtung 2 dargestellt. Wie ersichtlich ist durch die flexible Flächenmembran 7 bei jeder der abgebildeten Positionen eine Abdichtung eines oberen Teiles des Stationsgehäuses 20 gegenüber einem unteren Teil gegeben, in welchem der Katalysator 15 angeordnet ist.

Der Katalysator 15 ist über eine Waage 25 auf einem vorzugsweise licht- und gasdurchlässigen Sockel 24 positioniert, um den Katalysator 15 optisch zu analysieren und stromabwärts des Katalysators 15 Druck, Temperatur sowie Bestandteile eines Mediums zu messen, welches den Katalysator 15 passiert hat. Hierzu ist beispielhaft ein Kohlenwasserstoffsensor 28 dargestellt, mit welchem eine katalytische Reaktivität bei Einleitung eines Prüfmediums bekannter Zusammensetzung ermittelbar ist.

Wie dargestellt ist der Katalysator 15 derart auf der Waage 25 positioniert, dass das Substrat 27 nur indirekt über das Canning 26 auf der Waage 25 gelagert ist. Dies ermöglicht eine einfache Überprüfung einer Festigkeit einer Verbindung des Cannings 26 mit dem Substrat 27, indem ein kontrollierter Druck etwa senkrecht von oben auf das Substrat 27 ausgeübt und eine Verschiebung gemessen wird. Eine unzureichende Festigkeit der Verbindung zwischen dem Substrat 27 und dem Canning 26 ist durch eine Verschiebung des Substrates 27 gegenüber dem Canning 26 ermittelbar, welche bei definierter Kraft über einem Grenzwert liegt. Ergänzend kann auch eine in der Waage 25 gemessene Reaktionskraft zur Beurteilung der Verbindung herangezogen werden. Mit der Waage 25 wird auch eine Aschebeladung des Katalysators 15 durch Vergleich eines gemessenen Gewichtes mit einem Gewicht eines neuen Katalysators 15 gemessen, wodurch ein Reinigungserfolg während einer Reinigung ermittelt werden kann.

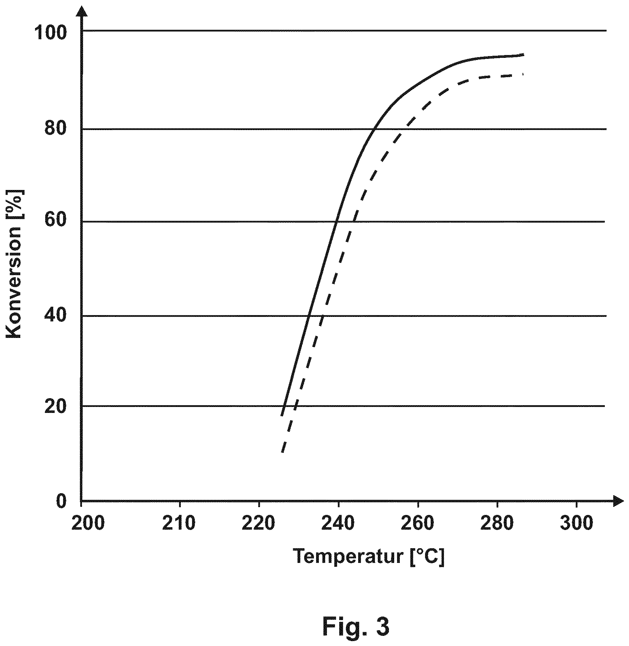

Fig. 3 zeigt Light-off-Kurven eines neuen und eines gebrauchten Katalysators 15, wobei die Light-off-Kurve des neuen Katalysators 15 als durchgezogene Linie und die Light-off-Kurve des gebrauchten Katalysators 15 als unterbrochene Linie eingezeichnet sind. Wie ersichtlich erfolgt bei einem gebrauchten Katalysator 15 eine Konversion bzw. eine Umsetzung von beispielsweise 50 % eines Schadstoffes wie Kohlenmonoxid erst bei einer höheren Temperatur als bei einem neuen Katalysator. Der 50 %-Light-off-Punkt des gebrauchten Katalysators liegt damit bei einer höheren Temperatur als des neuen Katalysators. Weiter ist mit einem neuen Katalysator auch eine höhere Konversion bei hohen Temperaturen möglich als mit einem gebrauchten Katalysator. Dies hat erhöhte Schadstoffwerte in einem Abgas bei Einsatz des Katalysators 15 in einem Fahrzeug zur Folge. Mit dem erfindungsgemäßen Verfahren kann die Light-off-Kurve eines ausgebauten und wiederaufbereiteten Katalysators direkt nach einer Wiederaufbereitung gemessen werden, sodass eine Aussage über eine chemische Funktion des Katalysators 15 bereits bei Abschluss der Wiederaufbereitung getroffen werden kann. Weiter kann die Light-off-Kurve auch bereits während einer Reinigung gemessen werden, beispielsweise während einer Reinigung mit einem heißen reaktiven Gas bei verschiedenen Temperaturen.

Mit Vorteil wird die Light-off-Kurve dabei für einzelne Teilbereiche bzw. Kanäle gemessen, wobei in der Regel eine integrierte Diagnose- und Reinigungseinrichtung eingesetzt wird. Dadurch kann die Reinigung genau dann beendet werden, wenn der jeweilige Teilbereich bzw. der Katalysator 15 bezüglich der katalytischen Reaktivität einen definierten Zustand erreicht hat, welcher beispielsweise über den 50 %-Light-off-Punkt definiert sein kann. Es kann auch vorgesehen sein, dass eine Reinigung so lange erfolgt, bis die während oder zwischen Reinigungsphasen gemessene Light-off-Kurve des wiederaufbereiteten Katalysators 15 der eines neuen Katalysators 15 entspricht. Dadurch kann ein Erfüllen entsprechender Abgasnormen gewährleistet werden. Darüber hinaus können auch weitere Funktionen des Katalysators 15 gewährleistet werden, wie beispielsweise Ruß aus dem Abgas zu filtern, abzubrennen und Stickstoffdioxid für einen stromabwärts des Katalysators 15 im Abgastrakt angeordneten SCR-Katalysator zu produzieren. Ein Punkt auf der Light-off-Kurve wird üblicherweise ermittelt, indem eine Konzentration eines Bestandteiles des Prüfgases wie Kohlenmonoxid nach Passieren des Katalysators 15 gemessen und in Relation zur Konzentration dieses Bestandteiles im Prüfgas vor Eintritt in den Katalysator 15 gesetzt wird. Hierzu wird üblicherweise ein Prüfgas mit bekannter Zusammensetzung eingesetzt. Ergänzend kann auch ein Sensor zur Erfassung des jeweiligen Bestandteiles im Prüfgas vor Eintritt in den Katalysator 15 vorgesehen sein.

Mit einem erfindungsgemäßen Verfahren sowie einer Vorrichtung 1 hierzu ist eine Messung einer katalytischen Reaktivität eines Katalysators 15 im ausgebauten Zustand möglich. Dadurch kann auf einfache Weise verhindert werden, dass ein wiederaufbereiteter Katalysator 15 mit unzureichender katalytischer Reaktivität in ein Fahrzeug eingebaut wird, welches strengen Abgasnormen genügen muss. Darüber hinaus kann eine erfindungsgemäße Einrichtung 2 neben einer Diagnose auch zu einer Reinigung des Katalysators 15 eingesetzt werden, wobei durch eine Düse 4 sowohl ein Prüfmedium als auch ein Reinigungsmedium auf den Katalysator 15 aufgebracht werden können. Dies ermöglicht einen besonders raschen Wechsel von einem Diagnoseverfahren zu einem Reinigungsverfahren, wodurch ein sehr effizientes Verfahren erreicht wird, mit welchem eine Reinigung insbesondere abhängig von einer chemischen Funktion des Katalysators 15 oder einem Reinigungszustand einzelner Kanäle erfolgen kann.

## Patentansprüche

1. Verfahren zur Diagnose eines aus einem Kraftfahrzeug ausgebauten, gasdurchlässigen Gegenstandes wie eines Katalysators (15) oder eines Filters, wobei zur Messung einer katalytischen Reaktivität eine Stirnseite des Gegenstandes mit einem Prüfmedium mit definierter Zusammensetzung wie Propangas oder Kohlenmonoxid mittels einer Einrichtung (2) durch eine Öffnung (5) beaufschlagt wird und an einer stromabwärts gelegenen Position eine Konzentration von zumindest einem reduzierten oder oxidierten Bestandteil des Prüfmediums nach Passieren des Gegenstandes gemessen wird, **dadurch gekennzeichnet, dass** das Prüfmedium bei unterschiedlichen Temperaturen zugeführt wird, um die katalytische Reaktivität bei verschiedenen Temperaturen zu bestimmen.

2. Verfahren nach Anspruch 1, **dadurch gekennzeichnet, dass** vor, nach oder während einer Messung der katalytischen Reaktivität eine Reinigung des Gegenstandes erfolgt, insbesondere mit einer als integrierte Diagnose- und Reinigungseinrichtung ausgebildeten Einrichtung (2).

3. Verfahren nach Anspruch 1 oder 2, **dadurch gekennzeichnet, dass** vor, nach oder während einer Messung der katalytischen Reaktivität eine weitere Form einer Qualität des Gegenstandes gemessen wird.

4. Verfahren nach Anspruch 3, **dadurch gekennzeichnet, dass** die Messung der Qualität durch ein Medium oder eine elektromagnetische Strahlung erfolgt, welche durch die Öffnung (5) ein- oder austritt.

5. Verfahren nach Anspruch 3 oder 4, **dadurch gekennzeichnet, dass** durch die Öffnung (5) ein vorzugsweise gasförmiges Medium mit einem definierten Druck oder einem definierten Volumenstrom auf den Gegenstand aufgebracht und ein Gegendruck und/oder ein Druckverlust und/oder eine Änderung des Volumenstromes über den Gegenstand gemessen werden.

6. Verfahren nach einem der Ansprüche 1 bis 5, **dadurch gekennzeichnet, dass** die Einrichtung (2) durch einen mehrachsigen Antrieb zu verschiedenen Positionen des Gegenstandes bewegt wird, um einzelne Teilbereiche zu vermessen und/oder zu reinigen.

7. Vorrichtung (1) zur Diagnose eines aus einem Kraftfahrzeug ausgebauten, gasdurchlässigen Gegenstandes, wie eines Katalysators (15) oder eines Filters, und zur Durchführung eines Verfahrens nach einem der Ansprüche 1 bis 6, wobei zur Messung einer katalytischen Reaktivität eine Einrichtung (2) mit einem eine Öffnung (5) aufweisenden Gehäuse (3), eine Regeleinrichtung sowie ein Sensor vorgesehen sind, wobei mit der Regeleinrichtung ein Prüfmedium definierter Zusammensetzung durch die Öffnung (5) transportierbar ist und wobei mit dem Sensor zumindest eine Konzentration eines reduzierten oder oxidierten Bestandteiles des Prüfmediums messbar ist, **dadurch gekennzeichnet, dass** die Vorrichtung (1) zur gezielten, schrittweisen Temperaturerhöhung des Prüfmediums ausgebildet ist, um eine Bestimmung der katalytischen Reaktivität bei verschiedenen Temperaturen zu ermöglichen.

8. Vorrichtung (1) nach Anspruch 7, **dadurch gekennzeichnet, dass** die Einrichtung (2) als integrierte Diagnose- und Reinigungseinrichtung ausgebildet ist.

9. Vorrichtung (1) nach Anspruch 7 oder 8, **dadurch gekennzeichnet, dass** die Vorrichtung (1), insbesondere die Einrichtung (2), zur Reinigung des Gegenstandes mit einem unter Druck stehenden Medium, insbesondere Druckluft, mit einer Druckluftzuleitung und einem Druckluftventil ausgebildet ist.

10. Vorrichtung (1) nach einem der Ansprüche 7 bis 9, **dadurch gekennzeichnet, dass** durch die Vorrichtung (1), insbesondere durch die Einrichtung (2), ein heißes Gas auf einen vor der Öffnung (5) positionierten Gegenstand aufbringbar ist.

11. Vorrichtung (1) nach einem der Ansprüche 7 bis 10, **dadurch gekennzeichnet, dass** die Vorrichtung (1), insbesondere die Einrichtung (2), einen Drucksensor (9) umfasst, mit welchem ein Gegendruck und/oder ein Druckverlust messbar sind.

12. Vorrichtung (1) nach einem der Ansprüche 7 bis 11, **dadurch gekennzeichnet, dass** die Vorrichtung (1), insbesondere die Einrichtung (2), zur optischen Erfassung eines strukturellen Zustandes des Gegenstandes eine Kamera (10) oder einen Laser-Scanner aufweist.

13. Vorrichtung (1) nach einem der Ansprüche 7 bis 12, **dadurch gekennzeichnet, dass** die Einrichtung (2) zur variablen Positionierung in der Vorrichtung (1) mehrachsig, insbesondere kraftgesteuert, bewegbar angeordnet ist.

14. Vorrichtung (1) nach einem der Ansprüche 7 bis 13, **dadurch gekennzeichnet, dass** mit dem Gehäuse (3) eine Messglocke (6) verbunden ist, welche die Öffnung (5) um vorzugsweise mindestens 1 mm überragt

15. Vorrichtung (1) nach einem der Ansprüche 7 bis 14, **dadurch gekennzeichnet, dass** die Einrichtung (2) in einem abgeschlossenen Stationsgehäuse (20) angeordnet ist, wobei insbesondere eine mit der Einrichtung (2) und dem Stationsgehäuse (20) jeweils dichtend verbundene flexible Membran zur hermetischen Trennung von Bereichen im Stationsgehäuse (20) vorgesehen ist.

## Claims

1. A method for diagnosing a gas-permeable object removed from a motor vehicle, such as a catalyst (15) or a filter, wherein an end face of the object is subjected through an opening (5), by means of a device (2), to a test medium with a defined composition, such as a propane gas or carbon monoxide, in order to measure a catalytic reactivity and, at a position located downstream, a concentration of at least one reduced or oxidised component of the test medium is measured after having passed through the object, **characterised in that** the test medium is fed at different temperatures in order to determine the catalytic reactivity at different temperatures.

2. The method according to claim 1, **characterised in that** before, after or during a measurement of the catalytic reactivity, cleaning of the object takes place, in particular with a device (2) constituted as an integrated diagnosis and cleaning device.

3. The method according to claim 1 or 2, **characterised in that** before, after or during a measurement of the catalytic reactivity, another form of a quality of the object is measured.

4. The method according to claim 3, **characterised in that** the measurement of the quality takes place by means of a medium or electromagnetic radiation, which enters or exits through the opening (5).

5. The method according to claim 3 or 4, **characterised in that** a preferably gaseous medium with a defined pressure or a defined volume flow is applied to the object through the opening (5) and a counter-pressure and/or a pressure loss and/or a change in the volume flow via the object is measured.

6. The method according to any one of claims 1 to 5, **characterised in that** the device (2) is moved by a multi-axial drive to different positions of the object in order to measure and/or to clean individual partial areas.

7. An apparatus (1) for diagnosing a gas-permeable object removed from a motor vehicle, such as a catalyst (15) or a filter, and for performing the method according to any one of claims 1 to 6, wherein a device (2) with a housing (3) comprising an opening (5), a control device and a sensor are provided for the measurement of a catalytic reactivity, wherein a test medium of defined composition can be transported through the opening (5) by means of the control device and wherein at least one concentration of a reduced or oxidised component of the test medium can be measured by means of the sensor, **characterised in that** the apparatus (1) is designed for the targeted, stepwise temperature increase of the test medium in order to enable a determination of the catalytic reactivity at different temperatures.

8. The apparatus (1) according to claim 7, **characterised in that** the device (2) is constituted as an integrated diagnosis and cleaning device.

9. The apparatus (1) according to claim 7 or 8, **characterised in that** the apparatus (1), in particular the device (2), is designed for cleaning the object with a pressurised medium, in particular compressed air, with a compressed air supply and a compressed air valve.

10. The apparatus (1) according to any one of claims 7 to 9, **characterised in that** a hot gas can be applied to an object positioned in front of the opening (5) by means of the apparatus (1), in particular by means of the device (2).

11. The apparatus (1) according to any one of claims 7 to 10, **characterised in that** the apparatus (1), in particular the device (2), comprises a pressure sensor (9) with which a counter-pressure and/or a pressure loss can be measured.

12. The apparatus (1) according to any one of claims 7 to 11, **characterised in that** the apparatus (1), in particular the device (2), comprises a camera (10) or a laser scanner for the optical detection of a structural state of the object.

13. The apparatus (1) according to any one of claims 7 to 12, **characterised in that** the device (2) is arranged so as to be movable in a multi-axial manner, in particular power-controlled, for the variable positioning in the apparatus (1).

14. The apparatus (1) according to any one of claims 7 to 13, **characterised in that** a measuring bell jar (6) is connected to the housing (3), which measuring bell jar projects beyond the opening (5) preferably by at least 1 mm.

15. The apparatus (1) according to any one of claims 7 to 14, **characterised in that** the device (2) is arranged in a closed station housing (20), wherein in particular a flexible membrane for the hermetic separation of regions in the station housing (20) is provided, which flexible membrane is connected in each case in a sealing manner to the device (2) and the station housing (20).

## Revendications

1. Procédé pour le diagnostic d'un objet perméable aux gaz démonté d'un véhicule automobile comme un catalyseur (15) ou un filtre, un milieu de contrôle d'une composition définie, comme du gaz propane ou monoxyde de carbone, étant appliqué à travers une ouverture (5) à une face avant de l'objet au moyen d'un système (2) pour la mesure de la réactivité catalytique et une concentration d'au moins un composant réduit ou oxydé du milieu de contrôle étant mesurée dans une position placée en aval de l'écoulement après passage de l'objet, **caractérisé en ce que** le milieu de contrôle est acheminé à des températures différentes pour déterminer la réactivité catalytique à des températures différentes.

2. Procédé selon la revendication 1, **caractérisé en ce qu'**un nettoyage de l'objet a lieu avant après ou pendant une mesure de la réactivité catalytique, en particulier avec un système (2) constitué comme système intégré de diagnostic et de nettoyage.

3. Procédé selon la revendication 1 ou 2, **caractérisé en ce qu'**une autre forme d'une qualité de l'objet est mesurée, avant, après ou pendant une mesure de la réactivité catalytique.

4. Procédé selon la revendication 3, **caractérisé en ce que** la mesure de la qualité a lieu à travers un milieu ou un rayonnement électromagnétique, lequel entre ou sort à travers l'ouverture (5).

5. Procédé selon la revendication 3 ou 4, **caractérisé en ce qu'**un milieu, de préférence gazeux, appliqué à l'objet à travers l'ouverture (5) avec une pression définie ou un débit volumétrique défini et une contre-pression et/ou une perte de pression et/ou une modification du débit volumétrique sont mesurés sur l'objet.

6. Procédé selon l'une quelconque des revendications 1 à 5, **caractérisé en ce que** le système (2) est déplacé à des positions différentes de l'objet au moyen d'un système d'entraînement multiaxial pour mesurer et/ou nettoyer des parties de zone individuelles.

7. Dispositif (1) pour le diagnostic d'un objet perméable aux gaz démonté d'un véhicule automobile, comme un catalyseur (15) ou un filtre et pour exécuter un procédé selon l'une quelconque des revendications 1 à 6, un système (2) avec un boîtier (3) comportant une ouverture (5), un système de régulation comme un capteur étant prévus pour la mesure d'une réactivité catalytique, un milieu de contrôle de composition définie pouvant être transporté à travers l'ouverture (5) avec le système de régulation et au moins une concentration d'un composant réduit ou oxydé du milieu de contrôle pouvant être mesurée avec le capteur, **caractérisé en ce que** le dispositif (1) est constitué pour une hausse de température envisagée, progressive du milieu de contrôle pour permettre une détermination de la réactivité catalytique à des températures différentes.

8. Dispositif (1) selon la revendication 7, **caractérisé en ce que** le système (2) est constitué comme système intégré de diagnostic et de nettoyage.

9. Dispositif (1) selon la revendication 7 ou 8, **caractérisé en ce que** le dispositif (1), en particulier le système (2), est constitué pour le nettoyage de l'objet avec un milieu sous pression, notamment de l'air comprimé, avec un conduit d'alimentation d'air comprimé et une vanne d'air comprimé.

10. Dispositif (1) selon l'une quelconque des revendications 7 à 9, **caractérisé en ce qu'**un gaz chaud peut être appliqué sur un objet positionné devant l'ouverture (5) par le dispositif (1), notamment par le système (2).

11. Dispositif (1) selon l'une quelconque des revendications 7 à 10, **caractérisé en ce que** le dispositif (1), notamment le système (2), comprend un capteur de pression (9) avec lequel il est possible de mesurer une contre-pression et/ou une perte de pression.

12. Dispositif (1) selon l'une quelconque des revendications 7 à 11, **caractérisé en ce que** le dispositif (1), notamment le système (2), comprend une caméra (10) ou un analyseur à laser pour la saisie optique d'un état structurel de l'objet.

13. Dispositif (1) selon l'une quelconque des revendications 7 à 12, **caractérisé en ce que** le système (2) est agencé de manière multiaxiale, notamment servocommandée et mobile pour le positionnement variable dans le dispositif (1).

14. Dispositif (1) selon l'une quelconque des revendications 7 à 13, **caractérisé en ce qu'**une cloche de mesure (6) est reliée au boîtier (3), laquelle dépasse l'ouverture (5) de préférence d'au moins 1 mm.

15. Dispositif (1) selon l'une quelconque des revendications 7 à 14, **caractérisé en ce que** le système (2) est disposé dans un boîtier de poste isolé (20), une membrane souple respectivement reliée de façon hermétique au système (2) et au boîtier de poste (20) étant notamment prévue pour la séparation hermétique des zones dans le boîtier de poste (20).
